**Europäisches Patentamt**

(19) **European Patent Office**

**Office européen des brevets**

(11) Numéro de publication: **0 098 228**
**B1**

(12) # FASCICULE DE BREVET EUROPEEN

(45) Date de publication du fascicule du brevet:
**27.08.86**

(21) Numéro de dépôt: **83420082.6**

(22) Date de dépôt: **05.05.83**

(51) Int. Cl.⁴: **A 61 M 1/16**

(54) Appareil à membranes semi-perméables, utilisable plus particulièrement en plasmaphérèse.

(30) Priorité: **28.05.82 FR 8209527**

(43) Date de publication de la demande:
**11.01.84 Bulletin 84/2**

(45) Mention de la délivrance du brevet:
**27.08.86 Bulletin 86/35**

(84) Etats contractants désignés:
**AT BE CH DE GB IT LI LU NL SE**

(56) Documents cités:
**EP - A - 0 045 073**
**DE - A - 1 642 798**
**FR - A - 1 593 273**
**FR - A - 2 420 976**
**FR - A - 2 427 119**
**US - A - 3 743 097**

(73) Titulaire: **RHONE-POULENC S.A., 25, quai Paul Doumer, F-92408 Courbevoie (FR)**

(72) Inventeur: **Cronenberger, Michel, Saint-Sorlin, F-69440 Mornant (FR)**
Inventeur: **Lateltin, Paul, La Rivoire, F-38200 Seyssuel (FR)**
Inventeur: **Rustant, Robert, 16, Chemin Rural, F-69380 Lissieu (FR)**

(74) Mandataire: **Vogt, Bernard et al, RHONE-POULENC INTERSERVICES Service Brevets Chimie Centre de Recherches de Saint-Fons B.P. 62, F-69192 Saint-Fons Cédex (FR)**

ACTORUM AG

## Description

La présente invention concerne un appareil à membrane semi-perméable utilisable notamment pour des opérations de séparation dans la domaine médical et plus particulièrement pour des opérations de plasmaphérèse.

Des appareils de plasmaphérèse sont connus, notamment par la demande PCT wo 8 200 102. Dans les appareils à membranes selon cette demande PCT, la membrane présente la caractéristique d'être repliée sur elle-même, ce qui permet de se dispenser d'avoir à étanchéifier au niveau du pli de la membrane. Cependant dans l'appareil décrit il est nécessaire de ménager deux trous de passage sur un pan de la membrane repliée et de placer autour de ces trous des dispositifs d'étanchéité tubulaires permettant le passage du sang.

Des appareils de plasmaphérèse sont connus également par la demande de brevet européen publiée sous le n° 45 073. Ces appareils (voir figure 2) présentent pour inconvénients le fait de nécessiter de nombreux éléments constitutifs, le fait que le sang circule sur de grandes surfaces au contact d'éléments autres que des membranes et le fait d'avoir plusieurs étanchéités périphériques à assurer à cause de la pluralité d'éléments constitutifs.

Un but de la présente invention est un appareil à membranes ne présentant pas les inconvénients des appareils de l'art antérieur.

Ainsi dans un appareil selon la présente invention les membranes utilisées ne présentent aucun trou de passage pour un fluide, et de ce fait aucun dispositif particulier devant être monté au niveau de ces trous.

Un autre but de la présente invention est un appareil assurant une étanchéité fiable sur le pourtour de chacune des deux membranes utilisées entre lesquelles circule le fluide à fractionner.

Un autre but de la présente invention est un appareil dans lequel les deux plaques supportant les membranes sont identiques et proviennent ainsi de même moule.

Un autre but de la présente invention est un appareil présentant le minimum d'éléments constitutifs et aisément obtenu en grande série de façon automatique.

Il a maintenant été trouvé et c'est ce qui fait l'objet de la présente invention un appareil à membranes semi-perméables, utilisable notamment en plasmaphérèse, et comprenant en combinaison:

- un élement essentiellement plan disposé à l'intérieur de l'appareil et comportant deux tubulures prolongées chacune par une canalisation interne,
- une membrane de part et d'autre dudit élément,
- deux plaques rigides formant les parois externes de l'appareil et enserrant ledit élément avec lesdites membranes, chaque plaque comportant au moins une tubulure pour l'évacuation du fluide ayant traversé les membranes, caractérisé en ce que:

i) l'élément plan est en forme de cadre,

ii) chaque membrane repose à sa périphérie directement sur ledit élément en forme de cadre,

iii) chacune des deux plaques comporte sur sa face interne des moyens pour supporter une membrane et pour permettre la circulation du fluide ayant traversé la membrane, et comporte de plus des trottoirs périphériques assurant l'écartement entre les faces internes des plaques et donc entre les deux membranes se faisant face.

La description de l'appareil selon la présente invention sera mieux comprise à l'aide des figures ci-jointes, qui illustrent, de façon schématique, à titre d'exemples non limitatifs, des modes de réalisation dudit appareil.

La fig. 1 représente de façon schématique un mode de réalisation d'un appareil selon la présente invention, ledit appareil étant en perspective et vu de l'extérieur.

La fig. 2 représente en perspective les deux plaques externes de l'appareil selon la figure 1.

La fig. 3 représente un mode de réalisation du cadre selon la présente invention et plus particulièrement le mode de réalisation correspondant à celui selon la figure 1.

La fig. 4 est une coupe selon IV-IV de l'appareil selon la figure 1.

La fig. 5 est un agrandissement partiel de la figure 4.

La fig. 6 est une coupe partielle selon VI-VI de la figure 1.

La fig. 7 est une demi-coupe partielle selon VII-VII de la figure 1.

La fig. 8 est une demi-coupe partielle selon VIII-VIII de la figure 1.

La fig. 9 est une vue en perspective d'un autre mode de réalisation de l'appareil selon la présente invention.

La fig. 10 est une coupe partielle selon X-X de la figure 9.

La fig. 11 est une coupe partielle montrant un autre mode de réalisation d'un appareil selon la présente invention.

La fig. 12 est une section partielle, au niveau de l'introduction ou de l'évacuation du fluide devant circuler entre les membranes, montrant un mode de réalisation du cadre à cet endroit.

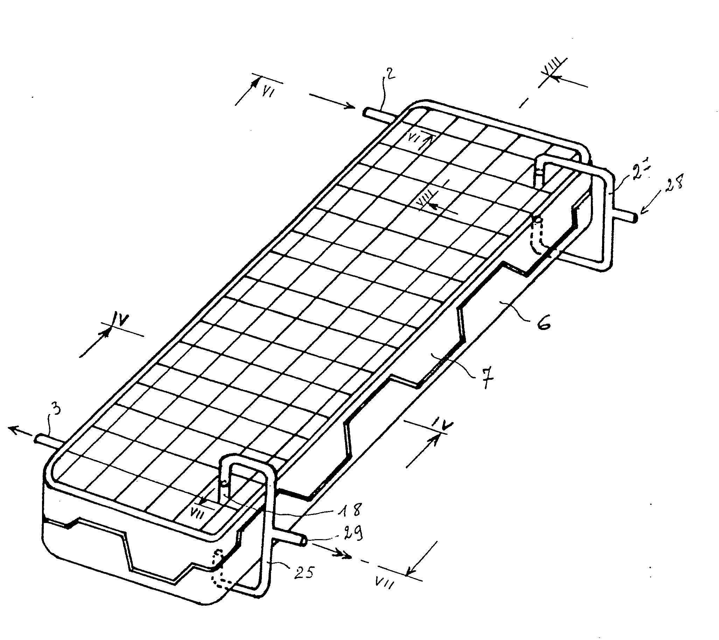

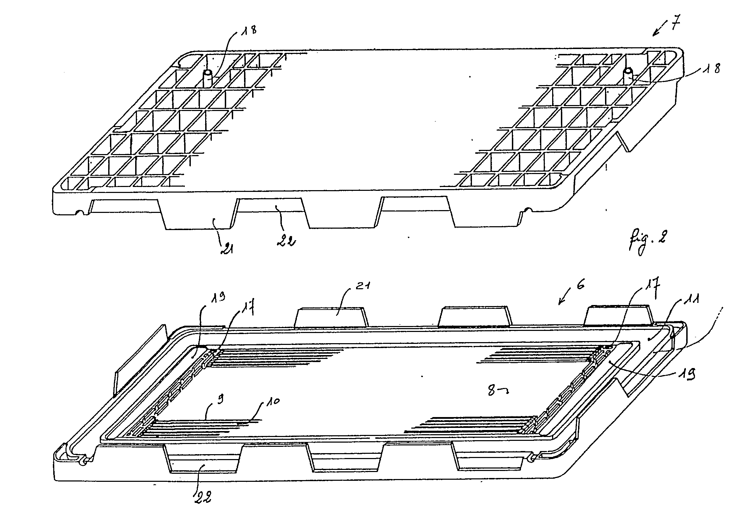

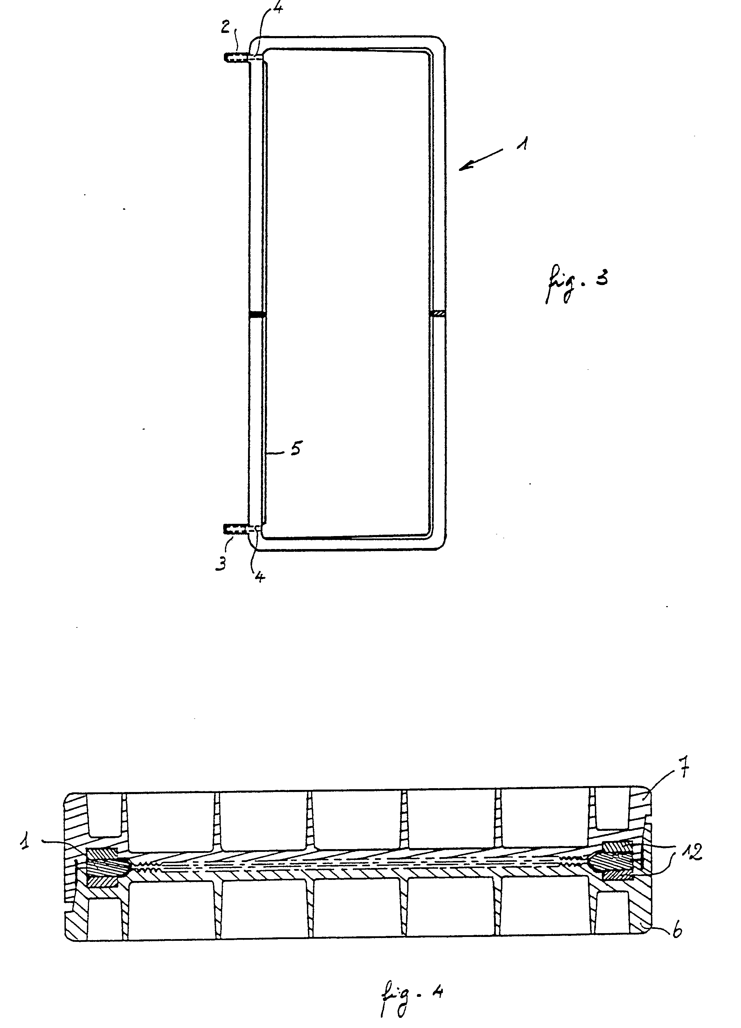

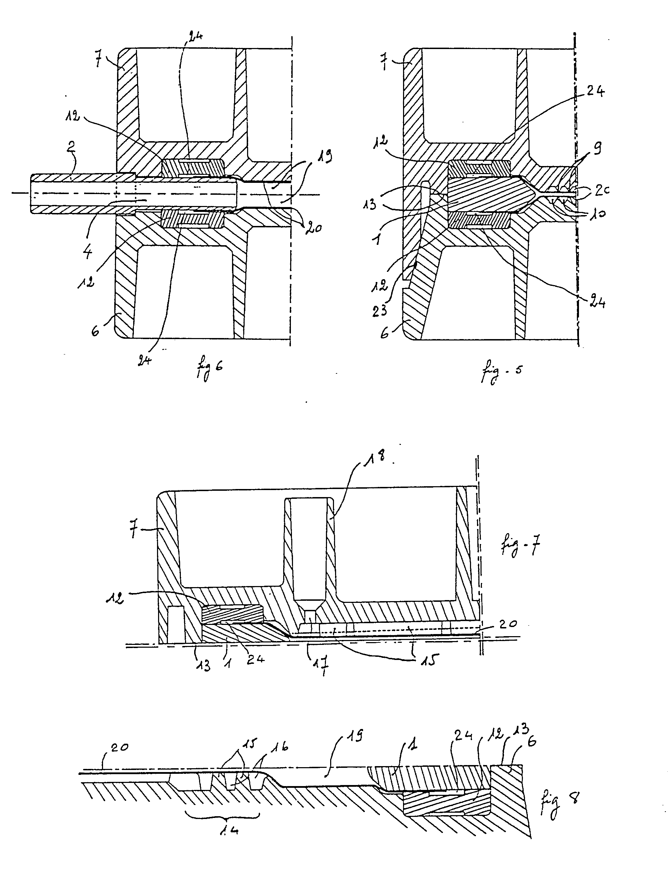

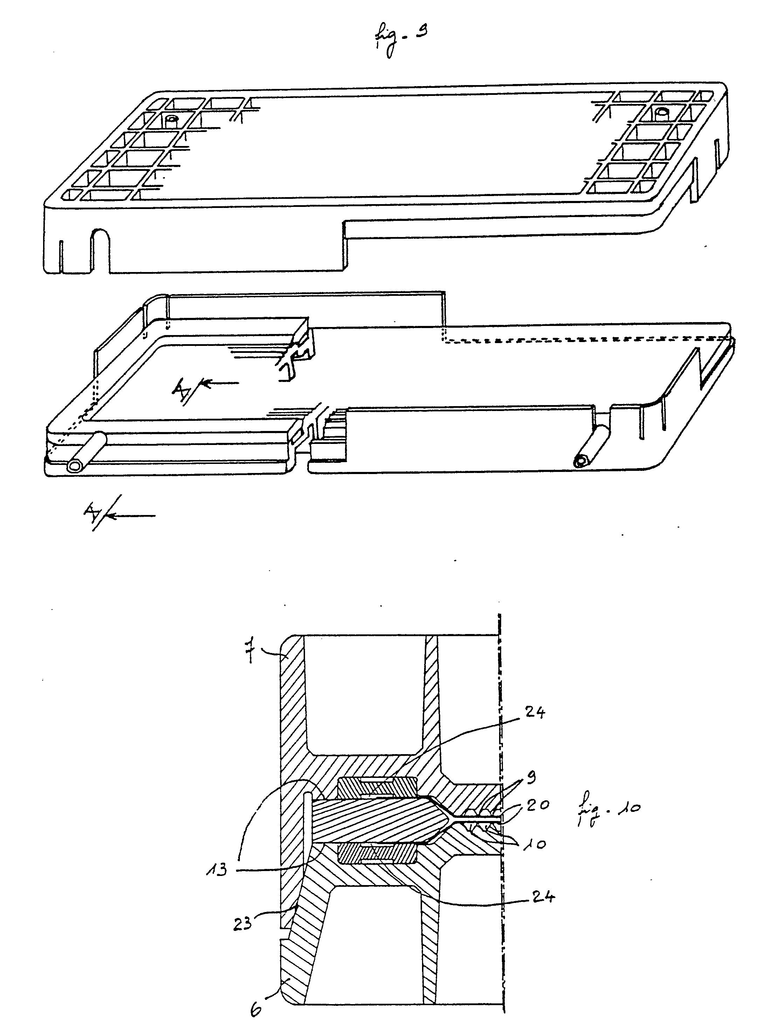

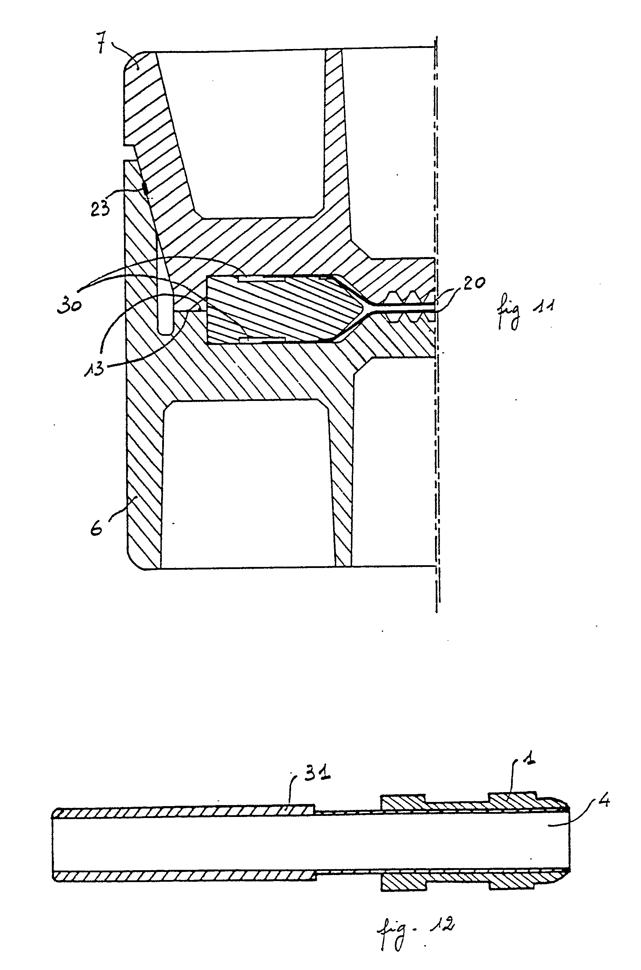

L'appareil selon les figures 1 à 8 comprend un cadre (1) rigide, plus particulièrement représenté figures 3 et 6, comportant deux tubulures (2 et 3) ayant chacune une canalisation (4) interne située dans l'épaisseur du cadre (1) et débouchant à l'intérieur de celui-ci. Ce cadre a avantageusement son bord (5) interne doublement biseauté (voir par exemple la figure 5) et est d'épaisseur constante sur tout son pourtour. Ce cadre (1) est avantageusement de forme rectangulaire, les tubulures (2 et 3) étant situées vers les extrémités des côtés les plus longs.

L'appareil selon les figures 1 à 8 comprend également deux plaques externes rigides (6 et 7) de forme générale rectangulaire. Ces deux plaques (6 et 7) sont indentiques l'une à l'autre (voir figure 2) et peuvent ainsi avantageusement être obtenues avec le même moule d'injection. Chaque plaque (6 et 7) comprend sur sa face interne (8) des moyens pour supporter une membrane (20), ces moyens étant par exemple des nervures (9) espacées les unes des autres et délimitant entre elles des rainures (10), mieux représentées figure 5. Ces nervures (9) ainsi que les rainures (10) sont avantageusement parallèles à l'axe longitudinal de chaque plaque (6 et 7). Chaque plaque (6 et 7) comprend vers sa périphérie, sur sa face interne (8), une dépression (11) dans laquelle se trouvent des moyens d'étanchéité constitués par un joint plat souple (12) ayant sensiblement la dimension du cadre (1). Chaque plaque (6 et 7) comprend un «trottoir» ou bord périphérique (13) dont la fonction sera précisée ci-après. Sur chaque face interne (8) de chaque plaque se trouve, vers les extrémités des nervures (9) une zone (14) de récupération du fluide ayant traversé les membranes (par exemple le plasma du sang), cette zone (14) étant disposée perpendiculairement à l'axe longitudinal de chaque plaque. Cette zone (14), mieux représentée figure 8, comprend par exemple des nervures (15), discontinues, sur lesquelles repose une membrane (20), les rainures (16) délimitées entre ces nervures (15) étant en communication avec une canalisation (17) traversant la plaque et en relation avec une tubulure externe (18), mieux représentée figure 7.

Chaque plaque (6 et 7) comprend de plus sur sa face interne (8), transversalement à l'axe longitudinal de la plaque et vers chaque extrémité, une zone (19) de répartition [sur toute la largeur de la zone comprenant les nervures (9)] du fluide devant circuler entre les membranes (20) se faisant face. Avantageusement chaque zone (19) de répartition est plus profonde et plus large du côté des tubulures (2 et 3) pour une meilleure répartition du fluide circulant entre les membranes (20), lorsque le cadre (1) comprend ses deux tubulures (2 et 3) sur un même côté, comme ceci est le cas du cadre représenté figure 3.

Chaque plaque (6 et 7) comprend également, à sa périphérie, des «pattes» (ou languettes) latérales (21) et des évidements (22), les pattes de la plaque (6) s'insérant dans les évidements de la plaque (7) et vice-versa. Les plaques (6 et 7) sont fixées l'une à l'autre par soudage aux ultrasons, par exemple aux endroits repérés par le chiffre 23, selon une technique connue.

Ainsi l'appareil décrit ci-avant comprend:

– un cadre (1) rigide, de forme rectangulaire,
– deux membranes (20) de part et d'autre de ce cadre (1), chaque membrane de forme rectangulaire étant au contact des nervures (9 et 15) de la plaque qui la supportent et reposant sur une face du cadre (1), sans la recouvrir complètement, comme cela apparaît nettement dans les figures 5, 6 et 8,
– deux joints (12) plats de forme rectangulaire dont la forme correspond à celle du cadre (1),

– deux plaques externes (6 et 7) identiques, soudées l'une à l'autre, dont la face interne (8) de chacune d'elles supporte une des deux membranes (20) grâce aux nervures (9 et 15).

L'épaisseur de la lame de fluide circulant entre les deux membranes (20) se faisant face est déterminée grâce aux bords ou trottoirs (13) servant de butée des plaques (6 et 7) lors du montage de l'appareil. L'appareil selon la présente invention est donc un appareil dans lequel le serrage, au montage, est effectué jusqu'à ce que les trottoirs ou bords (13) entrent en contact. Il s'agit d'un appareil à hauteur constante. Ainsi dans l'appareil selon les figures 1 à 8, pour une plaque (6 ou 7) considérée, la hauteur du bord (13), par rapport au plan de base de la plaque, est supérieure à la hauteur des nervures (9) et de la membrane (20). La demi-coupe partielle selon la figure 8 permet de considérer que la ligne en trait mixte correspond à la hauteur du trottoir (13) et que la distance entre ce trait mixte et la membrane (20) représente la moitié de l'épaisseur de la lame du fluide circulant entre les deux membranes (20) se faisant face.

En ce qui concerne les joints plats (12) ils ont avantageusement, au moins sur leur face au contact de la membrane (20), un évidement ou cavité (24) située sur toute cette surface considérée. Ainsi cette cavité (24) est de forme générale rectangulaire (comme chaque joint) lorsqu'elle est vue en plan. Cette cavité (24) est avantageusement de largeur et de profondeur telles que lorsque les bords (13) des plaques (6 et 7) sont en contact, la face de chaque joint (12) au contact de la membrane (20) soit sensiblement plane du fait du serrage. Ceci n'est pas représenté sur les figures pour mieux montrer la forme de chaque joint (12) non serré. Cette cavité (24) permet de considérer qu'il y a pour chaque joint (12) une double étanchéité du fait d'une double surépaisseur périphérique, une partie de la face du joint (12) appuyant sur la membrane (20) et l'autre partie de la même face du joint considéré appuyant sur le cadre (1). Ce mode de réalisation des joints (12) est particulièrement avantageux, notamment lorsque les membranes (20) sont «tramées», c'est-à-dire qu'elles possèdent intérieurement un tissu ou un non tissé poreux (de renforcement des propriétés mécaniques) enrobé du collodion ayant les propriétes de semi-perméabilité. Il s'est avéré en effet relativement difficile d'assurer une parfaite étanchéité avec de telles membranes «tramées», car il y a parfois passage du fluide, ayant traversé la membrane, sur la tranche de ladite membrane, par l'élément de renforcement. Avec le joint (12) tel que représenté on peut considérer que la partie du joint appuyant sur le cadre (1) sert de deuxième sécurité d'étanchéité dans la mesure où la partie du joint (12) au contact avec la membrane (20) laisserait passer une partie du fluide ayant traversé la membrane.

La figure 1 représente un mode d'utilisation, en plasmaphérèse, de l'appareil précédemment décrit. Dans cette utilisation les plaques (6 et 7) injectées sont par exemple en ABS (polymère à base d'acrylonitrile, de butadiène et de styrène), les joints (12) également moulés par injection sont en élastomère silicone commercialisés par la Société RHONE-POULENC (référence ESP 31 902/40 SHORE A), les membranes (20) ont une épaisseur de 120 microns, sont tramées par un tissu monofilament en polytéréphtalate d'éthylèneglycol dont la maille est de 75 microns, le diamètre du fil de 55 microns, le taux de vide de 33%. Le collodion donnant la semi-perméabilité à la membrane est à base d'un copolymère d'acrylonitrile/méthacrylate de méthyle/méthallylsulfonate de sodium comprenant 7,75% en poids de méthacrylate de méthyle et 80 mEq/Kg de sites acides. Ce polymère a une viscosité spécifique de 0,3 à 20 °C en solution à 2 g/l dans le diméthylformamide. Le taux de rejet de cette membrane est de:

     – 5 à 15% pour un latex calibré à 0,27 microns,

     – 65 à 80% pour un latex calibré à 0,4 microns,

     – 98 à 100% pour un latex calibré à 0,64 microns.

La façon de déterminer ce taux de rejet au latex est décrite pages 6 et 7 de la demande de brevet française 82 00 485.

Les plaques utilisées (6 et 7) ont chacune une surface utile de séparation de 300 cm² (10 × 30cm) et l'épaisseur de la lame de sang circulant entre les membranes (20) est de 370 microns. Pendant l'opération de plasmaphérèse au cours de laquelle le patient, bien portant, donne une partie du plasma de son sang, on peut opérer de la façon suivante. Le sang en provenance du donneur arrive dans l'appareil par la tubulure (2), se répartit dans la zone (19) entre les membranes se faisant face, puis circule entre les membranes (20) jusqu'à la zone (19) vers l'autre extrémité des plaques (6 et 7) pour sortir de l'appareil par la tubulure (3) et retourner au patient après avoir été appauvri d'une partie de son plasma qui a traversé les membranes (20). La circulation du sang est schématisée sur la figure 1 par les flèches à un chevron. Le plasma qui a traversé les membranes (20) passe dans les rainures (10) puis dans les rainures (16) pour être récupéré par les tubulures (18). Dans l'appareil représenté figure 1 la sortie du plasma est schématisée par la flèche à deux chevrons. Comme l'appareil selon la figure 1 est utilisé en position légèrement inclinée, l'arrière de l'appareil étant plus élevé, la sortie du plasma se fait uniquement par les deux tubulures (18) en avant de l'appareil, ces deux tubulures (18) étant avantageusement réunies; comme cela est représenté, par un dispositif (25) en forme de Y en plastique, tandis que les deux tubulures (18) à l'arrière de l'appareil et en position plus haute servent par exemple d'entrée d'air pour maintenir la pression atmosphérique dans les compartiments plasmatiques de l'appareil. En se rapportant à la figure 1 on voit que les tubulures (18) à l'arrière de l'appareil peuvent être réunies par un dispositif (27) en plastique dont l'entrée (28) comporte par exemple un bouchon poreux, non représenté, permettant de conserver la stérilité du plasma recueilli directement dans une poche souple (non représentée à la sortie (29) du dispositif (25). Dans ce mode d'utilisation de l'appareil le sang circulant entre les membranes (20) est bien évidemment à une pression supérieure à la pression atmosphérique dans tout l'appareil. L'appareil tel que précédemment décrit peut être utilisé avantageusement selon le procédé et dans l'appareillage de la demande de brevet française 82 00 485.

De nombreuses variantes de l'appareil précédemment décrit sont à la portée du technicien. Les figures 9 et 10 représentent un appareil équivalent à celui représenté figures 1 à 8, dans lequel les plaques (6 et 7) ont des languettes (21) et des évidements (22) de forme différente de ceux de l'appareil précédemment décrit, et dans lequel les deux plaques (6 et 7) sont également identiques l'une à l'autre. Dans cet appareil selon les figures 9 et 10, nous retrouvons tous les éléments constitutifs de l'appareil précédemment décrit, avec la différence provenant du fait que le cadre (1) rigide est serré entre les deux bords ou trottoirs (13) des plaques (6 et 7) et que de ce fait il participe à la détermination de l'épaisseur de la lame du fluide circulant entre les deux membranes (20).

La figure 11 représente une autre variante de réalisation de l'appareil selon la présente invention, ledit appareil ayant la particularité d'avoir un cadre (1) souple et ainsi il n'est plus nécessaire d'avoir les deux joints (12) d'étanchéité prévus dans les appareils selon les figures 1 à 10. Dans cet appareil selon la figure 11 les trottoirs (13) des plaques (6 et 7) sont en contact entre eux et assurent l'épaisseur de la lame du fluide circulant entre les membranes (20). Le cadre (1) souple possède avantageusement sur chaque face un évidement (30) dans lequel se trouve le bord de la membrane (20) qu'il serre contre la plaque (6 ou 7) au moment du montage de l'appareil. Cet évidement (30), comme l'évidement (24) des joints (12) dont il a été question ci-avant pour les appareils des figures 1 à 10, assure une double étanchéité au niveau de la membrane du fait des deux surépaisseurs de part et d'autre de cet évidement (24). La profondeur et la largeur des évidements (30) sont telles que dans l'appareil prêt à l'emploi, du fait du serrage du cadre (1) souple, les faces sont sensiblement planes, ce qui n'a pas été représenté figure 11 pour mieux montrer la forme du cadre (1) avant serrage. Le cadre (1) souple est bien entendu de forme rectangulaire comme le cadre (1) rigide des appareils précédemment décrits. Les évidements (30) sont également de forme rectangulaire vus en plan. Cependant étant donné que ce cadre (1) souple est écrasé dans l'appareil il peut être avantageux de passer dans ce cadre un élément plastique (31) rigide pour la réalisation des tubulures (2 et 3) et pour assurer une parfaite géométrie de la canalisation (4) de passage du fluide circulant entre les deux membranes (voir figure 12).

D'autre part, bien que les appareils décrits ci-avant aient des tubulures (2 et 3) d'un même côté du cadre (1), il peut être judicieux de disposer ces tubulures (2 et 3) de façon diagonalement opposée. La zone de distribution (19) du fluide circulant entre les membranes peut alors être de profondeur et de largeur uniformes sur toute la largeur de l'appareil.

D'autres variantes sont à la portée du technicien. Il est ainsi par exemple possible de prévoir sur chaque face interne (8) des plaques (6 et 7) des nervures (9) interrompues ou de les remplacer par des points de support des membranes (système «multipoints»). Il est également possible de supprimer les languettes (21) et les évidements correspondants (22) des plaques externes (6 et 7) et d'assurer la fixation desdites plaques par des moyens connus tels que des rails latéraux, des dispositifs en U métalliques, des dispositifs à vis ... Le dispositif à languettes (21) et évidements (22) est toutefois préférentiel. En ce qui concerne les utilisations des appareils précédemment décrits, outre la plasmaphérèse, ils peuvent être utilisés, en mettant les membranes adéquates, pour la séparation de certains éléments du plasma, pour la leucophérèse et de façon plus générale pour la séparation dans le domaine médical. A titre indicatif l'appareil peut être utilisé en employant deux membranes (20) ayant des caractéristiques de séparation différents et chaque filtrat peut être récupéré de façon indépendante.

## Revendications

1. Appareil à membranes semi-perméables, utilisable notamment en plasmaphérèse comprenant en combinaison:

– un élement (1) essentiellement plan disposé à l'intérieur de l'appareil et comportant deux tubulures (2 et 3) prolongées chacune par une canalisation interne (4),
– une membrane (20) de part et d'autre dudit élément (1),
– deux plaques rigides (6 et 7) formant les parois externes de l'appareil et enserrant ledit élément (1) avec lesdites membranes (20), chaque plaque (6 et 7) comportant au moins une tubulure (18) pour l'évacuation du fluide ayant traversé les membranes, caractérisé en ce que:

i) l'élément plan (1) est en forme de cadre,
ii) chaque membrane (20) repose à sa périphérie directement sur ledit élément (1) en forme de cadre,
iii) chacune des deux plaques (6 et 7) comporte sur sa face interne (8) des moyens pour supporter une membrane (20) et pour permettre la circulation du fluide ayant traversé la membrane (20), et comporte de plus des trottoirs (13) périphériques assurant l'écartement entre les faces internes (8) des plaques (6 et 7) et donc entre les deux membranes (20) se faisant face.

2. Appareil selon la revendication 1, caractérisé en ce que le cadre (1) est rigide et en ce que deux joints (12), de préférence plats, disposés de part et d'autre du cadre (1) et ayant sensiblement la même forme que lui assurent l'étanchéité entre chaque membrane (20) et le cadre (1).

3. Appareil selon la revendication 2, caractérisé en ce que chaque joint plat (12) comprend au moins sur sa face au contact de la membrane (20) une cavité (24) dans laquelle se trouve le bord de la membrane.

4. Appareil selon l'une quelconque des revendications précédentes, caractérisé en ce que le cadre (1) est compris, de même que le joint plat (12), dans une dépression (11) à l'intérieur de chaque plaque (6 et 7), sur leur périphérie et en ce que les trottoirs (13) de chaque plaque (6 et 7) sont en contact entre eux et disposés plus près du pourtour des plaques (6 et 7) que la dépression (11).

5. Appareil selon l'une quelconque des revendications 1 à 3, caractérisé en ce que le cadre (1) rigide est en contact avec les trottoirs (13) de chaque plaque (6 et 7) et assure ainsi l'écartement entre les deux membranes (20) se faisant face.

6. Appareil selon la revendication 1, caractérisé en ce que le cadre (1) est souple, disposé entre les deux plaques (6 et 7) dans la dépression (11) prévue dans chaque plaque (6 et 7), en ce que l'étanchéité est assurée par l'écrasement du cadre (1) sur la membrane (20) adjacente au fond de chaque dépression (11), et en ce que les deux trottoirs (13) périphériques sont en contact entre eux.

7. Appareil selon la revendication 6, caractérisé en ce que le cadre (1) souple comprend sur chaque face opposée un évidement (30) dans lequel se termine le bord des membranes (20).

8. Appareil selon l'une quelconque des revendications précédentes, caractérisé en ce que l'appareil est de forme générale rectangulaire.

9. Appareil selon l'une quelconque des revendications précédentes, caractérisé en ce que les deux plaques (6 et 7) sont identiques.

10. Appareil selon l'une quelconque des revendications précédentes, caractérisé en ce que les plaques (6 et 7) comprennent des languettes (21) et des évidements (22) en correspondance, les languettes (21) d'une plaque étant soudées, par ultrasons, dans les évidements (22) de l'autre plaque.

## Patentansprüche

1. Vorrichtung mit semipermeablen Membranen, insbesondere für die Plasmaphorese, mit einem im wesentlichen ebenen Element (1), das im Inneren der Vorrichtung angeordnet ist und zwei Rohrstutzen (2 und 3) aufweist, von denen jeder durch einen innenliegenden Kanal (4) verlängert ist, mit einer Membran (20) beiderseits des Elementes (1) und mit zwei starren Platten (6 und 7), welche die Aussenwände der Vorrichtung bilden und das Element (1) mit den Membranen (20) umfassen, wobei jede Platte (6 und 7) wenigstens einen Rohrstutzen (18) zum Ableiten des durch die Membranen geströmten Fluids aufweist, dadurch gekennzeichnet, dass

i) das ebene Element (1) die Form eines Rahmens hat,

ii) jede Membran (20) auf ihrem Umfang direkt auf diesem Element (1) in Form eines Rahmens aufliegt, und

iii) jede der beiden Platten (6 und 7) auf ihrer Innenseite (8) eine Einrichtung zum Abstützen einer Membran (20) und für die Zirkulation des durch die Membran (20) geströmten Fluids aufweist sowie mit Absätzen (13) längs des Umfangs versehen ist, welche den Abstand zwischen den Innenseiten (8) der Platten (6 und 7) und damit zwischen den beiden Membranen (20) bestimmen, die sich gegenüberliegen.

2. Vorrichtung nach Anspruch 1, dadurch gekennzeichnet, dass der Rahmen (1) starr ist und zwei vorzugsweise flache Dichtungen (12) beiderseits des Rahmens (1) angeordnet sind, welche im wesentlichen die gleiche Form haben wie dieser und zur Abdichtung zwischen jeder Membran (20) und dem Rahmen (1) dienen.

3. Vorrichtung nach Anspruch 2, dadurch gekennzeichnet, dass jede flache Dichtung (12) wenigstens auf der Seite, mit der sie an der Membran (20) anliegt, eine Ausnehmung (24) aufweist, in welcher sich der Rand der Membran befindet.

4. Vorrichtung nach einem der vorhergehenden Ansprüche, dadurch gekennzeichnet, dass der Rahmen (1) wie die flache Dichtung (12) längs des Umfangs in einer Vertiefung (11) im Inneren jeder Platte (6 und 7) liegen und die Absätze (13) jeder Platte (6 und 7) aneinander liegen und näher am Rand der Platten (6 und 7) als an der Vertiefung (11) angeordnet sind.

5. Vorrichtung nach einem der Ansprüche 1 bis 3, dadurch gekennzeichnet, dass der Rahmen (1) fest an den Absätzen (13) jeder Platte (6 und 7) anliegt und den Abstand zwischen den beiden sich gegenüberliegenden Membranen (20) sicherstellt.

6. Vorrichtung nach Anspruch 1, dadurch gekennzeichnet, dass der Rahmen (1) nachgiebig und zwischen den beiden Platten (6 und 7) in der Vertiefung (11), die in jeder Platte (6 und 7) vorgesehen ist, angeordnet ist, dass die Dichtigkeit durch Anpressen des Rahmens (1) über die Membran (20) an den Boden jeder Vertiefung (11) gewährleistet ist und dass die beiden Absätze (13) längs des Umfangs aneinander anliegen.

7. Vorrichtung nach Anspruch 6, dadurch gekennzeichnet, dass der nachgiebige Rahmen (1) auf jeder der einander gegenüberliegenden Seiten eine Ausnehmung (30) aufweist, in welcher der Rand der Membranen (20) endigt.

8. Vorrichtung nach einem der vorhergehenden Ansprüche, dadurch gekennzeichnet, dass die Vorrichtung eine allgemein rechteckige Form hat.

9. Vorrichtung nach einem der vorhergehenden Ansprüche, dadurch gekennzeichnet, dass die beiden Platten (6 und 7) identisch sind.

10. Vorrichtung nach einem der vorhergehenden Ansprüche, dadurch gekennzeichnet, dass die Platten (6 und 7) Laschen (21) und entsprechende Ausnehmungen (22) aufweisen, wobei die Laschen (21) der einen Platte mittels Ultraschall in die Ausnehmungen (22) der anderen Platte eingeschweisst sind.

**Claims**

1. Apparatus containing semipermeable membranes which is usable, in particular, in plasmapheresis, comprising, in combination:

– an essentially flat component (1) arranged inside the apparatus and incorporating two tubes (2 and 3) each extended by an internal pipe (4),
– a membrane (20) on either side of the said component (1),
– two rigid plates (6 and 7) forming the outer walls of the apparatus and enclosing the said component (1) with the said membranes (20), each plate (6 and 7) incorporating at least one tube (18) for the discharge of the fluid which has passed through the membranes, characterized in that:

i) the flat component (1) is in the form of a frame,
ii) each membrane (20) rests at its periphery directly on the said component (1) in the form of a frame,
iii) each of the two plates (6 and 7) incorporates on its inner face (8) means for supporting a membrane (20) and permitting the flow of the fluid which has passed through the membrane (20), and incorporates in addition peripheral rims (13) which provide for the spacing between the inner faces (8) of the plates (6 and 7) and consequently between the two membranes (20) which face each other.

2. Apparatus according to Claim 1, characterized in that the frame (1) is rigid and in that two gaskets (12), which are preferably flat, arranged either side of the frame (1) and having substantially the same form as the latter, provide for sealing between each membrane (20) and the frame (1).

3. Apparatus according to Claim 2, characterized in that each flat gasket (12) comprises, at least on its face in contact with the membrane (20), a cavity (24) in which the rim of the membrane is present.

4. Apparatus according to any one of the preceding claims, characterized in that the frame (1) is contained, together with the flat gasket (12), within a depression (11) inside each plate (6 and 7), on their periphery, and in that the rims (13) of each plate (6 and 7) are in contact with each other and arranged closer to the periphery of the plates (6 and 7) than the depression (11).

5. Apparatus according to any one of Claims 1 to 3, characterized in that the rigid frame (1) is in contact with the rims (13) of each plate (6 and 7) and thereby provides for the spacing between the two membranes (20) which face each other.

6. Apparatus according to Claim 1, characterized in that the frame (1) is flexible and arranged between the two plates (6 and 7) within the depression (11) provided in each plate (6 and 7), in that sealing is provided by the crushing of the frame (1) onto the adjacent membrane (20) at the bottom of each depression (11), and in that the two peripheral rims (13) are in contact with each other.

7. Apparatus according to Claim 6, characterized in that the flexible fram (1) comprises, on each opposite face, a recess (30) in which the edge of the membranes (20) terminates.

8. Apparatus according to any one of the preceding claims, characterized in that the apparatus is of generally rectangular shape.

9. Apparatus according to any one of the preceding claims, characterized in that the two plates (6 and 7) are identical.

10. Apparatus according to any one of the preceding claims, characterized in that the plates (6 and 7) contain matching tabs (21) and recesses (22), the tabs (21) of one plate being ultrasonically welded into the recesses (22) of the other plate.

18   7

18

21   22

*fig. 2*

19   17   21   6   17   11

9   10   8   19

22

fig. 3

fig. 4

fig 6

fig. 5

fig. 7

fig 8

fig. 9

fig. 10

fig 11

fig. 12